# EUROPEAN PATENT APPLICATION

(11) **EP 3 363 767 A1**
(43) Date of publication of application: **22.08.2018**
(21) Application number: 18156999.7
(22) Date of filing: 15.02.2018
(51) Int. Cl.: B67B 1/00, B07C 5/10, B07C 5/34, B65G 47/14, B65G 47/24, B67B 3/06, B67B 3/26, G01B 11/04, G01B 11/10, G01N 21/90

(54) **MACHINE AND METHOD FOR THE MEASUREMENT OF DIMENSIONAL PARAMETERS OF CORK STOPPERS**

(30) Priority: 17.02.2017 IT 201700018252
(71) Applicant: Sistel Service S.R.L., 40037 Sasso Marconi (Bologna) (IT)
(72) Inventor: PAGANI, Enrico, 40037 Sasso Marconi (Bologna) (IT)
(74) Representative: Fuochi, Riccardo

(57) **Abstract**

A machine (1) for measuring the dimensional parameters of stoppers (A) comprises at least one supporting structure (2) for a feeding station (3) which receives the stoppers (A) and sequentially distributes them on to conveyor elements (4) for transferring same according to a predetermined forward feeding direction (5) to a detection unit (6), which has a laser emitter (7) of an optical signal and a respective receiver (8) of the optical signal, the laser emitter (7) and the receiver (8) being controlled by a control processor (9) and facing opposite to the forward feeding direction (5), for the interception by the stoppers (A) of the optical signal and the subsequent measurement of the respective dimensional parameters.

## Description

### TECHNICAL FIELD OF THE INVENTION

The present invention relates to a machine and a method for measuring the dimensional parameters of cork stoppers, in particular cork stoppers used in the sector of bottles for wine and similar beverages.

In detail, the present invention relates to a machine and a method for measuring the dimensions of cork stoppers in different sizes, measuring their height and diameter, so as to divide the corks according to the required standards, separating the not conforming stoppers from the conforming ones.

### DESCRIPTION OF THE PRIOR ART

In the production sector of cork stoppers for bottles of wine and similar drinks, it is very important to inspect the corks produced, so as to verify compliance with the required dimensional and quality standards.

In general, machines according to prior art check dimensions by means of mechanical measurements, as a result of these measurements, they separate the non-conforming stoppers from the conforming ones and subdivide the latter according to specific characteristics.

However, the machines according to prior art allow for dimensional checks only of stoppers of the same size, and when they have to perform conformity checks of stoppers of a different size, each time they need mechanical parts to be replaced and adjusted for each dimensional standard to be checked.

This obviously entails disadvantages due mainly to the fact that the replacement and adjustment of the mechanical parts, to adapt the machines to a different size of the stoppers, cause a considerable waste of time, and consequently, also high costs related to the machine's inactivity during such operations.

The international patent application WO 2016/0326060 describes an apparatus for the inspection of plastic caps which includes devices to check a number stamped on the caps, the edge, the internal and external bottom surfaces and the internal and external side walls of the caps. The aforementioned devices comprise a light source and a unit for capturing images which are then sent to a control processor.

This solution is expensive and complicated due to the presence of devices for cap image acquisition and a sufficiently fast processor capable of checking such complex images.

In the French patent application FR 2 816 296 A1 a device for continuously moving the revolution symmetry objects, in particular cylindrical objects, and the use of the same device for the visual inspection and checking of the objects themselves are illustrated.

The device comprises a conveyor with two parallel guides on to which a pair of belts are wound and on which the objects to be inspected move; the belts form a corner between them, applying to the objects a combined rotation and translation motion.

A source of light directed towards the objects emits a planar light beam that hits the lateral surface of the objects, the light is then reflected from the lateral surface of the objects to a camera that through the same reflected light can detect any irregularities on the same surface of the objects.

### OBJECTS OF THE INVENTION

The scope of the present invention is to improve the state of the art.

Within such technical scope, an object of the present invention is to provide a machine for measuring the dimensions of cork stoppers which allows adequate conformity checking to be carried out on stoppers of different dimensions, without requiring any replacement of mechanical parts and labour-intensive specific adjustments whenever the size of stoppers is changed.

Another object of the present invention is to provide a machine for measuring the dimensions of cork stoppers which allows for safe and fast conformity checking of stoppers of different sizes, selecting conforming and non-conforming stoppers, and for their subdivision in compliance with the dimensional standards required. Yet another object of the present invention is to provide a machine for measuring the dimensions of cork stoppers characterised by low costs and simple and effective use.

This scope and these objects are also achieved by the packaging machine according to the attached claim 1.

The machine for measuring the dimensions of cork stoppers comprises at least one supporting structure for at least one feeding station which receives the stoppers and distributes them resting on the lateral surface sequentially on conveyor elements for transferring them according to a predetermined feeding direction through at least one detection unit for measuring stopper dimensions.

The detection unit comprises at least one laser emitter of an optical signal and at least one respective receiver; the laser emitter and receiver are controlled by at least one control processor and are substantially facing opposite to the feeding direction of the cork stoppers, for the stoppers to intercept at least part of the optical signal and for the measurement of the respective dimensional parameters.

This scope and these objects are also achieved by a method for measuring the dimensions of cork stoppers according to the attached claim 14.

### BRIEF DESCRIPTION OF DRAWINGS.

The features of the invention will be better understood by any technician skilled in the art from the following description and accompanying drawings, provided by way of non-limiting example, in which:
figure 1 is a perspective view of a machine for measuring the dimensional parameters of stoppers, according to the invention;
figure 2 is a perspective detail magnification of the machine, with a highlighted unit for detecting the dimensions of the stoppers, according to the invention;
figure 3 is a perspective schematic view of a unit for measuring the dimensions of the stoppers, according to the invention;
figure 4 is a perspective schematic view of stopper rotation parts, according to the invention;
figure 5 is a front schematic view of stopper rotation parts, according to the invention.

### EMBODIMENTS OF THE INVENTION.

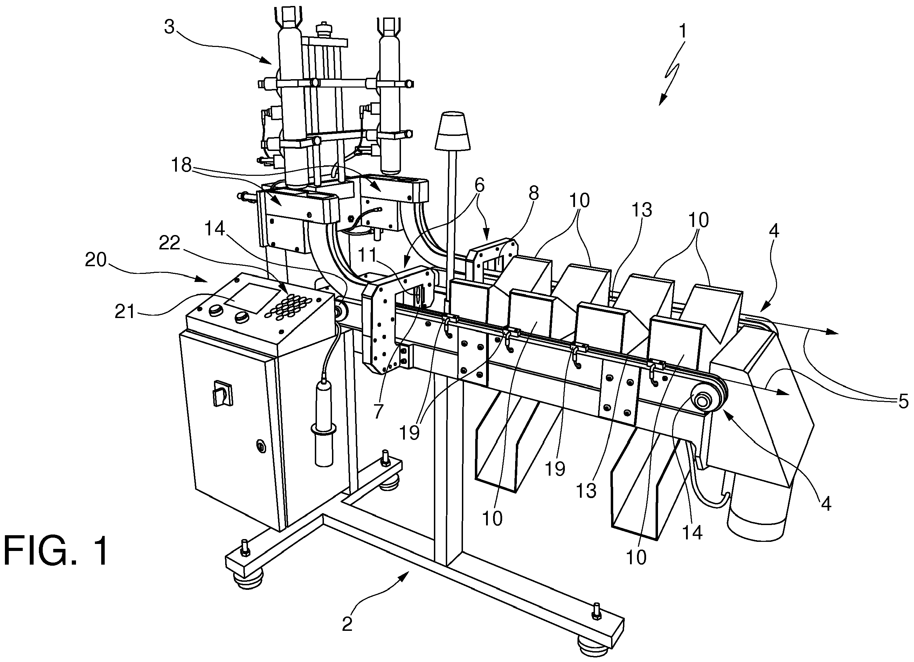

With reference to the accompanying figure 1, 1 is used to generally indicate a machine for measuring the dimensions of cork stoppers according to the present invention.

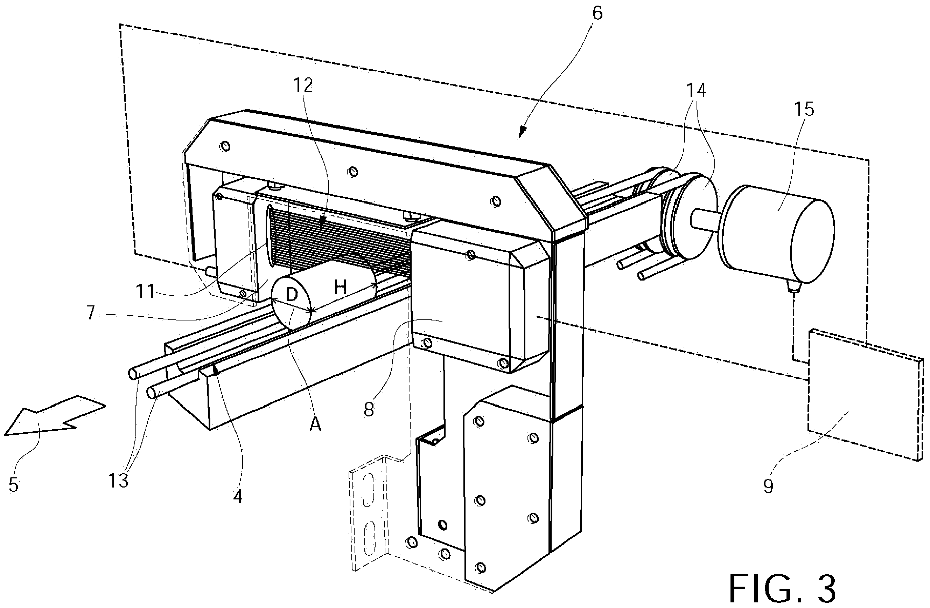

The machine 1 for measuring the dimensions of stoppers A comprises at least one supporting structure 2 for at least one feeding station 3 suitable for receiving stoppers A which are cylindrical in shape and have a height or length H, a diameter D and a lateral surface L, the height H being greater than diameter D (figure 3), as is usual for cork stoppers used in the wine bottle industry.

The stoppers A are arranged resting on the lateral surface L sequentially on conveyor elements 4 for transferring same according to a predetermined feeding direction 5 to at least one detection unit 6, for measuring the dimensions D and H of the stoppers A.

Due to the fact that the height H of the stoppers A is greater than the diameter D, during the measurement of the dimensions, the stoppers A are arranged horizontally resting on the lateral surface L, i.e. on the larger sized part, to have good support stability.

The aforementioned detection unit 6 comprises at least light emitting means, for example a laser emitter 7, which emit an optical signal and at least one respective receiver 8: the laser emitter 7 and the receiver 8 are controlled by at least one control processor 9 and are substantially facing opposite to the feeding direction 5 of the cork stoppers A.

During feeding on the conveyor elements 4, the corks A intercept, that is, break at least part of the optical signal coming from the light emitting means, allowing for measurement of the respective dimensional parameters, height and diameter, according to what will be explained in greater detail later.

The machine 1, in a single passage of the stoppers A, allows to check both dimensions, height H and diameter D, of the cylindrically shaped cork stoppers A; the machine 1 allows for selecting, according to the dimensions, between the non-conforming stoppers A and the conforming ones, subdividing the latter according to the data processed by the control processor 9 for sequential feeding of the same stoppers out of their respective sorting stations 10.

In a more detailed manner, the aforementioned laser emitter 7 is formed by a low power laser emitter provided with at least one lens 11 suitable for converting a point laser beam into a planar light beam 12 constituting the aforementioned optical signal.

The receiver 8 comprises at least one optical sensor. The optical sensor is e.g. of the CCD (*Charge-Coupled Device*) type; it should be noted that the receiver 8 may in any case comprise an optical sensor of any existing type.

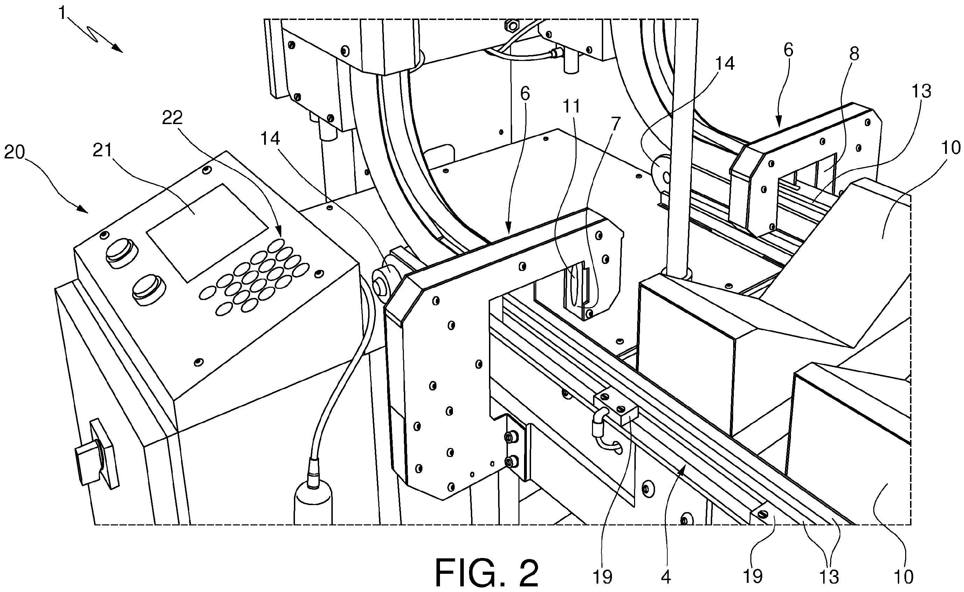

The aforesaid conveyor elements 4 - as shown in figures 1 and 2 and in particular in figure 3 - comprise at least one pair of belts 13 arranged to be parallel to one another at a predetermined distance smaller than the diameter of the stoppers A, so as to carry them sequentially resting on the lateral surface with their respective axes arranged according to the feeding direction 5.

The belts 13 are driven movably at the same speed by means of pulleys 14 of a respective drive unit, and are associated with at least one position transducer 15 controlled by the control processor 9.

In greater detail, the position transducer 15 is an angular transducer, e.g. an encoder, associated with at least one of the pulleys 14 for driving the belts 13, to detect the feeding motion of the belts 13 and therefore of the conveyed stoppers A. Since the feeding speed of the stoppers A is known, the control processor 9 - by which the light emitting means 7, the receiver 8 and the transducer 15 are controlled - also allows to calculate the height H, or length, of each stopper A; this measurement takes place indirectly based on the duration of the break in the optical signal detected by the receiver 8 upon the passage of each stopper A, the transfer speed of the stoppers A being known.

It should be noted that the measurement of the dimensions of each stopper A is based on the breaking of the optical light signal by the body of the stopper A detected by the receiver, making the measurement of the dimensions very safe, reliable and particularly suitable for the physical characteristics of the cork stoppers.

The surface of the cork stoppers, cork being a natural product, can have irregularities, cracks, small cavities, etc., therefore, a safe, reliable and effective way to measure the dimensions of each stopper A is that it is the body of each stopper A that must break the optical light signal, independently of the good or less than good characteristics of the surface of the stopper A.

Moreover, since the break in the optical light signal occurs without any contact with the stoppers A, the measurement can also take place very quickly, i.e. the passage of the stoppers A through the detection unit 6 can occur at high frequency.

Each one of the belts 13 has a round cross-section, but it may also have a rectangular cross-section - in this case the belts 13 are arranged to be parallel and mutually inclined towards the stoppers A, so as to suitably convey the stoppers A - or they may also have a trapezoidal cross-section.

The conveyor elements 4 may also be of the belt type, or of the chain type, comprising means for restraining the stoppers A arranged with their respective axes parallel to the feeding direction 5.

For these solutions, too (not shown in the figures), it is provided that the belt or the chain be associated with at least one position transducer 15 controlled by the control processor 9.

The light emitting means 7 and the receiver 8 substantially facing and opposed to the detection unit 6 are arranged substantially orthogonally with respect to the feeding direction 5, so that the stoppers A, pulled by the conveyor elements 4 with their respective axes arranged according to the feeding direction 5, orthogonally intercept the planar laser light beam 12.

In the embodiment shown in the figures, the machine 1 comprises two parallel lines for measuring the dimensional parameters of the stoppers A, each line comprising at least one respective detection unit 6; thanks to this configuration high machine productivity is ensured.

In one version of the present invention, the machine 1 can also comprise rotation means 16 of the stoppers A around their axis, for conformity checking of their circumference via the same detection unit 6.

In greater detail, said rotation means 16 may comprise at least one pair of controlled rollers 17 rotating about their respective axes parallel to the feeding direction 5 and located at a respective detection unit 6.

The stoppers A can be made to slide on the pair of rollers 17 directly by the conveyor elements 4 or by pushing means (not shown) dedicated to this purpose.

Alternatively, the pair of rollers 17 may be of the driven movable type from an inactive configuration, in which the rollers 17 are spaced from the stoppers A, i.e. the rollers 17 are located below the conveyor elements 4 so as not to touch the stoppers A, toward a raised operating configuration, in which the rollers 17 abut against the outer surface of the stoppers A.

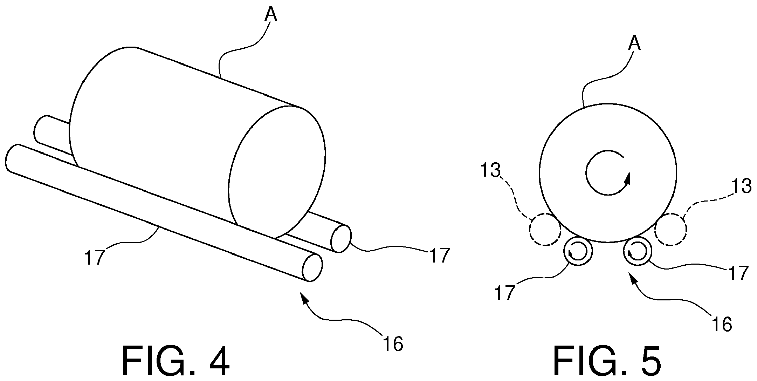

For example, the rollers 17, when engaged by a stopper A, are arranged to be interposed between the belts 13 of the conveyor elements 4, as shown schematically in figure 5.

According to a version of the invention, the machine 1 comprises only one or more detection units 6 of the type described above.

According to another version of the present invention, the machine 1 can further comprise at least one load cell 18 for measuring the weight of each stopper A, e.g. located immediately downstream of the feeding station 3, and according to a further version it may also include at least one hygrometer for measuring the humidity value of the stoppers A.

It is therefore also possible to select conforming and non-conforming stoppers according to weight and humidity standards.

An object of the present invention is also a method for measuring the dimensional parameters of cork stoppers A.

The method comprises the steps of distributing the stoppers A resting on the lateral surface L sequentially on conveyor elements 4, conveying the stoppers A with the axes arranged according to a predetermined feeding direction 5, detecting the dimensions of the stoppers A via at least one detection unit 6 arranged along the predetermined feeding direction 5, the step of detecting the dimensions of the stoppers A comprises at least emitting an optical signal consisting of a planar light beam 12 by light emitting means, for example a laser emitter 7, towards the stoppers A sequentially conveyed on the conveyor elements 4, detecting, by means of a respective receiver 8, the optical signal intercepted or broken at least partly by the stoppers A, the light emitting means 7 and the receiver 8 being substantially facing opposite to the feeding direction 5 and exposed to the intermediate passage of the stoppers A, sending the signal detected by the receiver 8 to at least one control processor 9 to calculate the D and H dimensions of the stoppers A.

The method further comprises the steps of detecting the speed of stoppers A via at least one position transducer 15 associated with the conveyor elements 4 and controlled by the control processor 9.

Then, steps are provided to perform the passage of each stopper A conveyed by the conveyor elements 4 through the planar light beam 12, calculate the height H of each stopper A via the control processor 9 on the basis of the feeding speed detected by the position transducer 15 and the duration of the at least partial break of the optical signal detected by the receiver 8 determined by the passage of each stopper A across the planar light beam 12.

In particular, if the parallel laser light beam 12 is arranged so as to fully hit each stopper A from top to bottom, the calculation of the diameter of each stopper A is carried out directly by the control processor 9 on the basis of the height of the break in the optical signal determined by the passage of each stopper A across the planar light beam 12 detected by the receiver 8 controlled by the processor 9 itself.

The stoppers A can also intercept the planar light beam 12 from a predetermined reference height, also called *offset,* and in this case, the measurement of the diameter of each stopper is indirect and is calculated as the sum of such reference height and the height of the optical signal break.

The use method and operation of the machine 1 for the selection of stoppers A according to the invention are, in the light of the foregoing description, completely intuitive.

The cork stoppers A, having a cylindrical shape, are inserted in random order in the feeding station 3, which allows to distribute the stoppers A sequentially resting on the lateral surface L on the belts 13 of the conveyor elements 4 aligned with the axes arranged according to the feeding direction 5.

It is noted that the belts 13 of the conveyor elements 4 can convey cork stoppers A of any size thanks to the construction geometry of the same conveyor elements 4.

Optionally, adjustment means (not shown) of the inter-distance of the belts 13 may be provided.

In any case, suitable conveying of stoppers A supported laterally is guaranteed, even in the case of stoppers of very different dimensions.

The forward feeding of belts 13, and therefore of the stoppers A, is detected by the position transducer 15, controlled by the control processor 9: this makes it possible to know the feeding speed of the stoppers A.

The belts 13 convey the stoppers A to the dimensional detection unit 6, at which each stopper crosses orthogonally the beam of parallel laser light 12 generated by the laser emitter 7, breaking up to a certain height the optical signal received by the receiver 8 with CCD sensor.

As mentioned above, the control processor 9 - by which the light emitting means 7, the receiver 8 and the transducer 15 are controlled - then allows to calculate the height H, or length, of each stopper A based on the duration of the break in the optical signal detected by the receiver 8 upon the passage of the corresponding stopper A, its feeding speed being known.

The processor 9 also allows for the measurement of the diameter of each stopper A directly, according to the break height of the optical signal detected by the receiver 8 with a CCD sensor determined by the passage of each stopper A across the planar light beam 12.

As already mentioned, the construction geometries of the machine 1 can be such that the stoppers A fully intercept the planar light beam 12, or intercept it starting from a predetermined reference height. In the second case, the diameter of stopper A is given by the sum of the reference height and the height of the break in the detected optical signal.

It is noted that the detection unit 6 allows to check compliance with the required standards of stoppers A of any size, and therefore stoppers A of very different sizes, in a single passage - actually it is sufficient to feed them forward across the planar light beam 12 for detecting all sizes, and this without any adjustment being required - or with a simple adjustment of the inter-distance of the belts 13 - for the machine 1 or without any replacement of its parts being required.

The machine 1 therefore enables to identify the non-conforming stoppers and the conforming stoppers, and to subdivide the latter via the processor 9 on the basis of the dimensional data detected.

In a version of the present invention, machine 1 also allows the stoppers to be divided according to their weight, measured by means of the load cells, and humidity value, measured by the hygrometer, distributing them at the output of their respective sorting stations 10.

For example, the stoppers A are conveyed to a respective sorting station 10 by means of compressed air jets supplied by respective nozzles 19 controlled by the control processor 9 and suitably distributed along the belts 13 of the conveyor elements 4.

The machine 1 comprises a control unit 20 for interfacing with the user provided with a display 21 and a push-button panel 22 controlled by the control processor 9.

As described above, the machine 1 for the selection of stoppers A allows for correct conformity control in a single passage of stoppers A of any size, without any waste of time nor costs due to the replacement of mechanical parts and to the specific adjustments required in the machines of any type known in the art whenever the size of the stoppers changes.

The machine 1 allows for the control and selection of stoppers A of very different sizes which have also been accidentally mixed before being introduced in the feeding station 3.

Furthermore, the machine 1 allows for safe, reliable and fast conformity control of cork stoppers of different sizes, selecting conforming and non-conforming stoppers, and subdividing them according to their required standards.

It has thus been seen how the invention achieves the intended purposes.

In the event that the technical characteristics mentioned in the attached claims are followed by reference numbers, such reference numbers are introduced for the sole purpose of further clarifying the claims, and consequently the above mentioned reference numbers do not have any limiting effect on the interpretation of each element identified as an example by such reference numbers.

The present invention has been described according to preferred embodiments, but various equivalent versions are possible still within the scope of the appended claims.

## Claims

1. A machine (1) for measuring the dimensional parameters of cork stoppers (A), said stoppers (A) having a cylindrical shape and having a height or length (H), a diameter (D) and a lateral surface (L), the height (H) being greater than the diameter (D), comprising at least one support structure (2) for at least one feeding station (3) for receiving the stoppers (A) and distributing them resting on the lateral surface (L) sequentially on conveyor elements (4) for transferring the stoppers (A) according to a predetermined feeding direction (5), at least one dimensional detection unit (6) arranged along said predetermined feeding direction (5), **characterised in that** said dimensional detection unit (6) comprises at least light emitting means (7) which emit an optical signal and at least one respective receiver (8), said light emitting means (7) and said receiver (8) being controlled by at least one control processor (9) and being substantially facing opposite to said forward feeding direction (5), said optical signal being intercepted and broken at least partially by the stoppers (A) so as to measure the respective dimensional parameters of height (H) and diameter (D).

2. A machine according to claim 1, wherein said laser emitter means comprise a laser emitter (7) which is formed by a low power laser emitter provided with at least one lens (11) suitable for converting a point laser beam into a parallel laser light beam (12) constituting the aforementioned optical signal.

3. A machine according to any one of claims 1 and 2, wherein said receiver (8) comprises at least one optical sensor, for example a CCD sensor, or a *Charge-Coupled Device.*

4. A machine according to any one of the preceding claims, wherein said conveyor elements (4) comprise at least one pair of belts (13) arranged parallel to each other at a predetermined distance smaller than the diameter of the stoppers (A), so as to convey them sequentially resting with their respective axes arranged according to said feeding direction (5), said belts (13) being movably driven at the same speed by means of pulleys (14) of a respective drive unit, said at least one pair of belts (13) being associated with at least one position transducer (15) controlled by said control processor (9).

5. A machine according to claim 4, wherein said position transducer (15) is an angular transducer associated with at least one of said pulleys (14) for actuating said belts (13), for detecting the forward motion of said belts (13) themselves and therefore of the conveyed stoppers (A).

6. A machine according to any one of claims 4 and 5, wherein each one of said belts (13) has a round, or a rectangular, or a trapezoidal cross-section.

7. A machine according to any one of claims 1 to 3, wherein said conveyor elements (4) are of the belt or chain type comprising restraining means of the stoppers (A) arranged with their respective axes parallel to the said forward feeding direction (5), said belt or said chain being associated with at least one position transducer (15) controlled by said control processor (9).

8. A machine according to any one of the claims from 2 to 7, wherein said substantially opposite facing laser emitter (7) and said receiver (8) of said detection unit (6) are arranged substantially orthogonally with respect to said forward feeding direction (5), for the interception and at least partial breaking by the stoppers (A), pulled by said conveyor elements (4) with their respective axes arranged according to said forward feeding direction (5), of said parallel laser light beam (12).

9. A machine according to any one of the preceding claims, comprising two lines for measuring the dimensional parameters of the stoppers (A), each one of said lines comprising at least one respective detection unit (6).

10. A machine according to any one of the preceding claims, comprising rotation means (16) of the stoppers (A) around their axis, for conformity checking of their circumference via said detection unit (6).

11. A machine according to claim 10, wherein said rotation means (16) comprise at least one pair of controlled rollers (17) rotating about their respective axes parallel to said feeding direction (5) and located at at least one dimensional detection unit (6).

12. A machine according to claim 11, wherein the stoppers (A) are touch-conveyed on said at least one pair of rollers (17) directly from said conveyor elements (4), or by means of thrusting means.

13. A machine according to claim 11, wherein said at least one pair of rollers (17) is driven movable from an inactive configuration, wherein said rollers (17) are spaced from the conveyed stoppers (A), to an operating configuration, wherein said rollers (17) abut against the outer surface of the stoppers (A).

14. A method for measuring the dimensions of cork stoppers (A), said stoppers (A) having a cylindrical shape and having a height or length (H), a diameter (D) and a lateral surface (L), the height (H) being greater than the diameter (D), comprising the steps of:
distributing said stoppers (A) resting on the lateral surface (L) sequentially on conveyor elements (4);
conveying said stoppers (A) with the axes arranged according to a predetermined feeding direction (5);
detecting the dimensions of the stoppers (A) through at least one detection unit (6) arranged along said predetermined feeding direction (5);
**characterised in that**
said step of detecting the dimensions of the stoppers (A) comprises at least emitting an optical signal consisting of a planar light beam (12) through light emitting means, for example a laser emitter (7), towards the stoppers (A) sequentially conveyed on the conveyor elements (4), detecting, by means of a respective receiver (8), the optical signal intercepted or broken at least partly by the stoppers (A), said light emitting means (7) and said receiver (8) being substantially facing opposite to the feeding direction (5) and exposed to the intermediate passage of the stoppers (A), sending the signal detected by the receiver (8) to at least one control processor (9) to calculate the (D) and (H) dimensions of the stoppers (A).

15. A method according to claim 14, comprising detecting the speed of the stoppers (A) via at least one position transducer (15) associated with said conveyor elements (4) and controlled by said control processor (9); completing the passage of each stopper (A) conveyed by the conveyor elements (4) through the planar light beam (12); calculating the height H of each stopper (A) via the control processor (9) on the basis of the feeding speed detected by said position transducer (15) and the duration of the breaking, at least, in part of the optical signal detected by said receiver (8) determined by the passage of each stopper (A) across the planar light beam (12).

16. A method, according to claim 14 or 15, wherein the step of calculating the diameter (D) of each stopper (A) by means of said control processor (9) takes place directly on the basis of the height of the break of said optical signal, due to the passage by each stopper (A) across said planar light beam (12) and detected directly by said receiver (8).

17. A method, according to any one of claims 14 and 15, wherein the stoppers (A) intercept said planar laser light beam (12) starting from a predetermined reference height, the measurement of diameter (D) of each stopper (A) being calculated as the sum of said reference height and the breaking height of said optical signal.
